(19) **Europäisches Patentamt**
**European Patent Office**
**Office européen des brevets**

(11) **EP 2 300 291 B1**

(12) **FASCICULE DE BREVET EUROPEEN**

(45) Date de publication et mention
de la délivrance du brevet:
**28.12.2011 Bulletin 2011/52**

(51) Int Cl.:
**B60T 13/16** *(2006.01)*

(21) Numéro de dépôt: **09797503.1**

(86) Numéro de dépôt international:
**PCT/EP2009/059078**

(22) Date de dépôt: **15.07.2009**

(87) Numéro de publication internationale:
**WO 2010/007101 (21.01.2010 Gazette 2010/03)**

(54) **DISPOSITIF D'ASSISTANCE HYDRAULIQUE DE FREINAGE**

HYDRAULISCHE BREMSUNTERSTÜTZUNGSVORRICHTUNG

HYDRAULIC BRAKING ASSISTANCE DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **17.07.2008 FR 0804082**

(43) Date de publication de la demande:
**30.03.2011 Bulletin 2011/13**

(73) Titulaire: **Robert Bosch GmbH**
**70442 Stuttgart (DE)**

(72) Inventeurs:
• **FOURCADE, Jean**
**F-35890 Laille (FR)**

• **RICHARD, Philippe**
**F-77500 Chelles (FR)**
• **CASTELLO, Olivier**
**77450 Ebly (FR)**

(74) Mandataire: **Hurwic, Aleksander Wiktor**
**Robert Bosch France (SAS)**
**126, rue de Stalingrad**
**93700 Drancy (FR)**

(56) Documents cités:
**DE-A1- 3 209 337    DE-A1- 3 502 473**
**DE-A1- 3 502 474    DE-A1- 4 338 906**

## Description

La présente invention se rapporte à un dispositif d'assistance hydraulique de freinage. Un tel dispositif est plus particulièrement destiné à être mis en place dans un véhicule, notamment un véhicule de type berline ou utilitaire. L'invention a pour but de remédier à des problèmes d'évolution technologique, d'encombrement et de complexité de fabrication.

Dans le domaine automobile, on connaît des dispositifs d'assistance de freinage, notamment de type pneumatique tel que décrit dans DE 35 02 473 ou de type électro-hydraulique tels que décrits dans DE 32 09 337, DE 35 02 474 **ou** DE 43 38 906. Les premiers dispositifs d'assistance pneumatique comportent en pratique un servofrein pneumatique, muni d'une chambre avant à volume variable séparée d'une chambre arrière également à volume variable par une cloison formée par une membrane étanche et souple et par une plaque-jupe rigide. La plaque rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant placée du côté du maître cylindre est reliée pneumatiquement à une source de fluide. La chambre arrière, opposée à la chambre avant, est placée du côté d'une pédale de frein, et est reliée pneumatiquement, de manière contrôlée par une valve, à une source de fluide propulseur typiquement de l'air sous pression atmosphérique. Au repos, c'est-à-dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison et de mettre en oeuvre l'assistance de freinage pneumatique.

L'inconvénient présenté par ce type d'assistance pneumatique se situe dans le rapport volumique de l'effort d'assistance. En effet, la force d'assistance étant procurée par l'air à la pression ambiante, peu élevée, le servomoteur doit avoir une dimension suffisamment grande pour que l'effort d'assistance soit important. Quand, pour des raisons d'encombrement, il n'est pas possible de réaliser des chambres avec des volumes suffisants, on peut prévoir d'en réaliser plusieurs en cascade. Ces réalisations s'effectuent cependant dans tous les cas au détriment de l'encombrement dans le compartiment moteur du véhicule.

En outre ces dispositifs utilisent comme source de dépression pour la chambre avant une dépression établie dans un collecteur d'admission du moteur. Or, avec les moteurs modernes, l'air admis se réduit, et la source de dépression devient moins efficace. Avec les véhicules à moteur diesel, ce n'est même pas envisageable.

Il est par ailleurs connu des assistances de freinage électro-hydrauliques. Typiquement, un moteur électrique est relié à une pompe hydraulique qui injecte un liquide hydraulique sous pression dans les circuits de freinage, en aval du maître cylindre, au moment où ceux-ci sont sollicités. Le contrôle de ce moteur électrique est réalisé par des mesures de pressions régnant dans les chambres avant et arrière du servofrein pneumatique. Une telle solution présente de nombreux inconvénients.

D'abord, les pompes d'assistance utilisées doivent alors être des pompes haute pression, capables d'un débit constant. En pratique, elles nécessitent d'être mues par des moteurs à puissance importante, typiquement 1 kilowatt. Même pour un véhicule avec un moteur thermique puissant, de 100 kilowatts par exemple, rien que cette assistance représente 1 % de la puissance fournie par le moteur. C'est trop.

Technologiquement, les pompes fournissent une pression élevée. Un diaphragme interposé dans un circuit de retour au réservoir, commandé en fonction des mesures des pressions, permet d'injecter un liquide hydraulique sous pression variable dans le circuit de frein. L'ouverture et la fermeture du diaphragme posent par ailleurs des problèmes de bruit et des problèmes de difficultés de pilotage précis.

Dans l'invention, on a voulu résoudre ces problèmes d'encombrement, de consommation énergétique, et de difficulté de commande précise par une conception totalement nouvelle du circuit d'assistance de freinage. Le circuit d'assistance de freinage de l'invention peut par ailleurs être couplé, mais ce n'est pas une obligation, avec un circuit d'assistance pneumatique, voire avec un circuit d'assistance électro-hydraulique.

Le principe de l'invention comporte l'adjonction d'un régulateur ou servofrein hydraulique interposé entre l'entrée du maître cylindre et le point d'appui de la tige de commande transmettant les efforts exercés par le conducteur sur une pédale de frein. Ce régulateur hydraulique se comporte de la même manière qu'un servofrein pneumatique. L'appui du pied du conducteur sur la pédale de frein provoque mécaniquement la mise en communication d'un circuit hydraulique du maître cylindre avec le circuit d'assistance hydraulique entraîné par la pompe, de préférence électrique.

Le régulateur comporte à cet effet un cylindre intermédiaire interposé, auquel est juxtaposé un cylindre accolé. Un équipage mobile est interposé dans ce cylindre accolé et le sépare en deux chambres. Cet équipage mobile est mécaniquement sensible à une différence de pression produite dans une première chambre du cylindre accolé, par l'action du pied sur la pédale de frein, et une pression produite dans une deuxième chambre du cylindre accolé, par l'injection du flux hydraulique provenant de la pompe. Dès que la pression produite par le pied augmente, elle repousse l'équipage mobile et du fluide hydraulique sous haute pression est injecté dans la deuxième chambre du cylindre accolé.

Un piston traverse deux chambres du cylindre intermédiaire. Il possède la particularité d'avoir une section dans la deuxième chambre plus grande que sa section dans la première chambre. L'action de la pompe s'exerce alors supplémentairement dans la deuxième chambre sur la différence de surface de ce piston. Ce piston appuie alors sur un piston primaire d'un maître cylindre, voire entraîne les pistons primaires et secondaires d'un maître cylindre tandem. Lorsque le conducteur retire son pied de la pédale de frein, une valve de mise en communication de la pompe hydraulique avec les chambres du cylindre accolé se ferme, les pressions dans le régulateur se réduisent naturellement par mise en communication avec le réservoir hydraulique.

L'invention a donc pour objet un dispositif d'assistance hydraulique de freinage comportant un maître cylindre muni d'une chambre primaire et d'un piston primaire mû par ailleurs par une tige de commande, caractérisé en ce qu'il comporte un régulateur hydraulique interposé entre un point d'appui de la tige de commande et un point d'appui sur le piston primaire.

De préférence, le régulateur hydraulique, servofrein, comporte

- un cylindre intercalaire interposé entre un point d'appui de la tige de commande et le cylindre primaire
- un piston prolongateur en appui sur le piston primaire et interposé, dans le cylindre intercalaire, entre un point d'appui de la tige de commande et le piston primaire,
- ce piston prolongateur définissant dans le cylindre intercalaire une chambre amont proche de la tige de commande et une chambre aval proche du piston primaire,
- le piston prolongateur ayant une surface de section plus grande dans la chambre aval que dans la chambre amont,
- un cylindre accolé au cylindre intercalaire,
- un caisson, placé dans le cylindre accolé et formant dans le cylindre accolé une chambre arrière et une chambre avant,
- les chambres amont et aval du cylindre intercalaire étant en communication respectivement avec la chambre arrière et la chambre avant du cylindre accolé,
- une équipage mobile placé dans le caisson,
- une vanne déclenchée par l'équipage mobile,
- une communication pour mettre en communication une source hydraulique avec la chambre avant, par l'intermédiaire de la vanne.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :

- Figure 1 : une représentation schématique d'un maître cylindre selon l'invention ;
- Figure 2 : une représentation détaillée du régulateur hydraulique de l'invention.

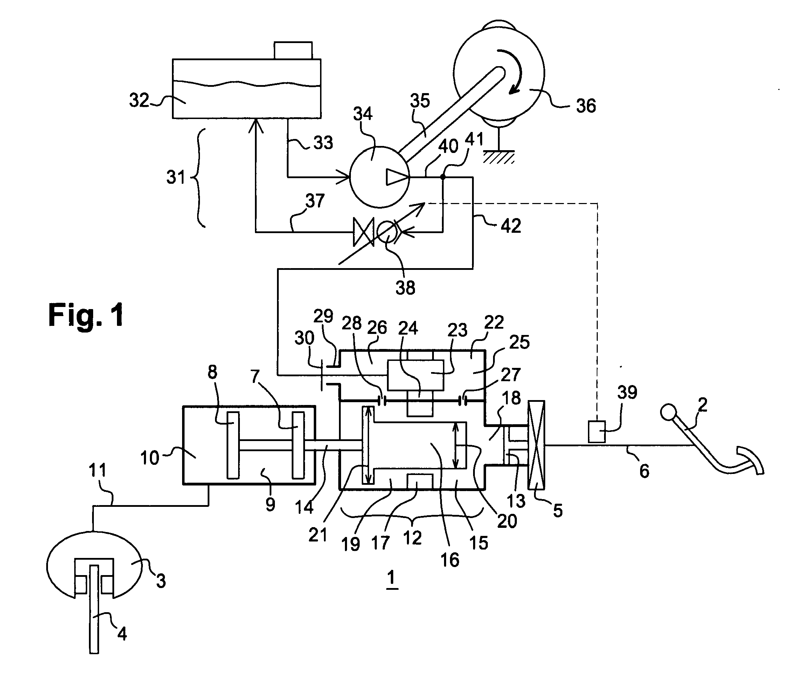

La figure 1 montre la représentation schématique d'un dispositif 1 d'assistance hydraulique de freinage selon l'invention. Ce dispositif 1 est utilisé dans un véhicule, non représenté, pour transmettre un effort de freinage appuyé par un pied d'un conducteur sur une pédale 2 de frein à un dispositif de freinage 3, typiquement un étrier de frein à disque agissant sur un disque 4, d'une roue du véhicule. Le dispositif 1 peut être assisté d'un dispositif 5 pneumatique d'assistance de freinage optionnel. L'effort appliqué sur la pédale 2 est ainsi transmis d'une tige de commande 6, ici de la pédale 2, à un piston primaire 7, voire de préférence aussi à un piston secondaire 8 d'un maître cylindre tandem. Les chambres telles que 9 et 10 de ce maître cylindre sont en relation par des tubulures hydrauliques telles que 11 avec des dispositifs de freinage tels que 3 montés, par des circuits hydrauliques indépendants, sur les différentes roues du véhicule.

Selon l'invention, le dispositif 1 comporte un régulateur hydraulique 12 interposé entre un point d'appui 13 de la tige 6 de commande et un point d'appui à l'entrée 14 dans le maître cylindre. L'invention couvre de préférence un dispositif global, comportant donc le maître cylindre proprement dit et le régulateur 12, parce que de préférence ces deux pièces peuvent être formées à partir d'un même bloc de métal usiné, après production en fonderie. Il est cependant envisageable de les fabriquer en deux parties et de relier par des moyens classiques.

Le servofrein régulateur 12 est ainsi formé d'un cylindre intercalaire 15 interposé et aligné entre le point d'appui 13 et point d'appui 14. A l'intérieur de ce cylindre intercalaire 15, se déplace un piston prolongateur 16. Ce piston 16 coulisse dans le cylindre 15 à l'aide d'une bague 17 permettant de définir dans le cylindre intercalaire deux chambres : une chambre amont 18, proche de la tige de commande 6 et une chambre aval 19, proche du piston primaire 7. Une des particularités du piston prolongateur 16 est de posséder deux éléments avec des surfaces de section respectivement 20 et 21 dans ces chambres de tailles différentes. La section 21 est plus grande que la section 20. En pratique, le piston prolongateur 16 ne peut donc franchir la bague 17 puisque la section 21 est plus grande que la section 20 qui correspond, elle, à l'intérieur de la bague 17.

En plus du cylindre intercalaire 15, le régulateur de l'invention comporte un cylindre accolé 22, accolé au cylindre 15. Pour de nombreuses raisons, tous les cylindres sont de préférence circulaires. A l'intérieur du cylindre accolé 22, se déplace une navette 23. La navette 23 coulisse dans une bague 24 prenant appui sur les parois du cylindre accolé 22 de manière à définir dans celui-ci une chambre arrière 25 et une chambre avant 26. La chambre arrière 25 est en communication avec la chambre amont 18 alors que la chambre avant 26 est en communication avec la chambre aval 19. Elles sont en communication par l'intermédiaire respectivement de communications 27 et 28. Les diverses chambres amont, aval et avant, arrière sont remplies de fluide hydraulique par un dispositif annexe. En pratique, des joints montés notamment dans les bagues 17 et 24 empêchent les communications de fluide entre les chambres amont et aval et entre les chambres avant et arrière.

La chambre avant 26 comporte une vanne 29, ici symbolique, représentée sous la forme d'un clapet 30. La vanne 29-30 sert à mettre en relation une source 31 de pression hydraulique avec la chambre avant 26. La source 31 comporte de manière classique un réservoir 32 de fluide hydraulique débouchant par une tubulure 33 dans une pompe à débit constant 34 mue par un arbre 35, entraîné par un moteur 36, de préférence un moteur électrique. En sortie de la pompe 34, un circuit de retour 37 renvoie le liquide hydraulique, pompé dans le réservoir 32, dans ce même réservoir 32. Ce circuit de retour est muni d'une vanne 38 pilotée. La vanne 38 est pilotée, d'une manière classique, par un détecteur 39 mesurant la sollicitation de la pédale 2 et/ou de la tige de commande 6.

Le fonctionnement de cette source hydraulique 31, connu, est le suivant. Lorsque la pédale 2 est sollicitée, le détecteur 39 ferme un peu la vanne 38. Dans ces conditions, la pompe 34, qui produit un débit constant, voit la pression dans une tubulure de sortie 40 menant à la vanne 38 augmenter. Cette pression augmentée est prélevée par un piquage 41 pour être appliquée sur la vanne 29-30 du cylindre accolé du régulateur 12 de l'invention. Plus la pédale est enfoncée, plus alors la pression dans le conduit 42 qui mène du piquage 41 à la vanne 29-30 augmente.

Le principe de l'invention est le suivant. Au moment où l'utilisateur appuie sur la pédale 2, du fait de la réaction des pistons 7 et 8 du maître cylindre, la pression de fluide hydraulique dans la chambre amont 18 augmente. Elle augmente donc également en conséquence dans la chambre arrière 25 du fait de l'existence de la communication 27. Dans ces conditions, la navette 23 se déplace et ouvre le clapet 30, de sorte que la chambre avant 26 du cylindre accolé 22 se trouve maintenant soumise à une pression élevée transmise par la tubulure 42. Cette pression élevée régnant dans la chambre avant 26 est transmise par l'intermédiaire de la communication 28 à la chambre aval 19.

Le piston prolongateur 16 est alors soumis, pour la différence de surface entre la section 20 et la section 21 à une pression élevée, d'assistance, fournie par la pompe 34. Dans ces conditions, le piston prolongateur 16, en appui 14 sur le piston primaire 7 du maître cylindre, exerce sur ce dernier une force plus grande, assistée, provoquant un meilleur freinage du disque de freinage 4.

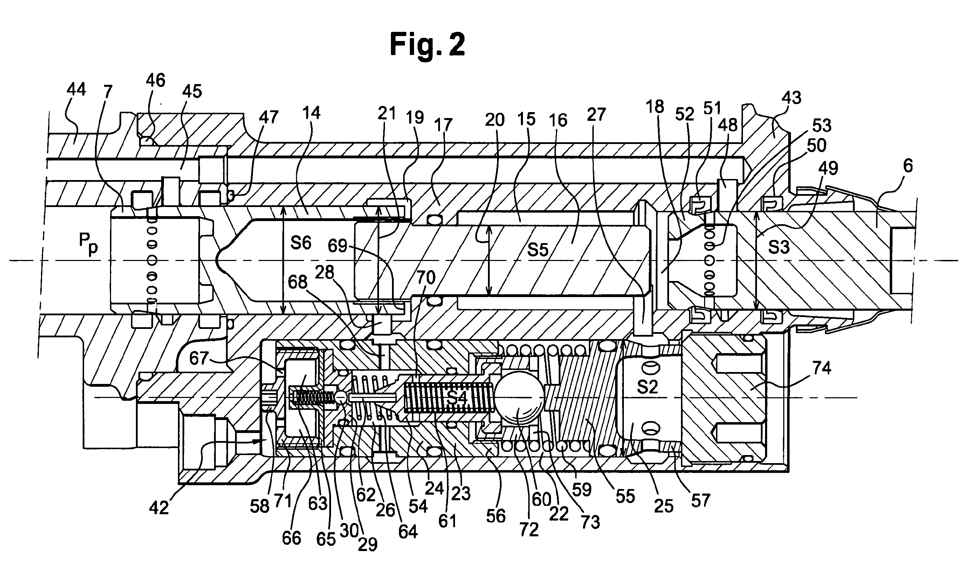

La figure 2 reprend les mêmes éléments en détail et conduit à une réalisation pratique du dispositif schématique montré sur la figure 1. Elle permet de voir plusieurs autres caractéristiques du dispositif de l'invention. Premièrement, autant le maître cylindre comportant un régulateur peut être réalisé en une seule opération, autant il peut être réalisé à l'aide de deux pièces : une première pièce doublement cylindrique 43 formant le régulateur proprement dit, montré sur la figure 2, et une pièce classique 44, formant le maître cylindre. La pièce 43 comporte un bloc percé du cylindre intercalaire 15 ainsi que du cylindre accolé 22. La distribution de fluide hydraulique à la fois dans le maître cylindre 44 et dans le régulateur 43 est réalisé par un alésage 45 aligné dans chacune de ces deux pièces et menant au réservoir 32. A l'endroit de leur fixation l'une sur l'autre, les deux pièces 43 et 44 sont munies de joints tels que 46 pour éviter les fuites. L'alésage 45 pour sa partie qui pénètre dans la pièce 43 est terminé en extrémité par une communication 48 par laquelle le fluide hydraulique peut pénétrer dans le cylindre intermédiaire 15.

Le cylindre intermédiaire 15 possède entre l'endroit de la bague 17 et l'entrée par laquelle pénètre la tige de commande 6 un alésage avec une section 49 intermédiaire entre la section 20 et la section 21. Par exemple. Dans cet alésage 49, à proximité du lieu d'introduction de la tige 6, un jeu de joints toriques tels que 50 et 51 permettent d'une part, lorsque la tige 6 est en position reculée de remplir sans fuite externe la chambre amont 18 de fluide hydraulique. D'autre part, ils permettent lors de l'enfoncement de cette tige 6 de faire s'élever la pression dans la chambre amont 18 en empêchant la remontée de liquide vers le réservoir 32.

A cet effet, la tige de commande 6 est munie à son extrémité introduite dans le cylindre intercalaire 15 d'une cloche 52 munie d'ouvertures périphériques 53 qui, en position de repos de la tige de commande 6, sont situées en regard de l'ouverture 48. Dans cette position de repos, le joint 50 empêche le fluide hydraulique de remonter le long de la tige 6. Dès que la tige de commande 6 est enfoncée et que le lieu des ouvertures 53 dépasse le joint 51, ce dernier empêche le fluide hydraulique prisonnier dans la chambre 18 de remonter vers le réservoir 32. Dans ces conditions, la pression présente dans la chambre 18 augmente.

Cette augmentation a deux effets. Premièrement, le piston prolongateur 16 recevant cette pression sur sa section 20 est poussé et met en oeuvre par son extrémité 7, jouant le rôle de piston primaire du maître cylindre, la pression nécessaire au freinage. D'autre part, la pression dans la chambre 18 ayant augmenté, elle provoque le passage du fluide dans la communication 27 entre cette chambre amont 18 et la chambre arrière 25 du cylindre accolé 22. La navette 23 possède pour sa part deux particularités, d'une part elle est déformable, et d'autre part, elle entraîne un équipage mobile 54 creux. La navette 23 est ainsi composée d'un socle 55 mobile globalement en regard de la communication 27 et d'un caisson 56 fixe, globalement en regard de la communication 28.

Le socle 55 repose contre un fond de la chambre arrière 25 par un piètement 57, alors que le caisson 56 repose contre le plafond de la chambre avant 26 par une butée 58. Un ressort 59 à boudin maintient le socle 55 et le caisson 56 écartés l'un de l'autre. Le socle 55 peut circuler dans la chambre 25 en se rapprochant du caisson 56. Le socle 55 appuie par ailleurs sur une bille 60 qui, par réaction, appuie sur un ressort 61 à boudin contenu dans l'équipage mobile 54. L'équipage mobile 54 est muni à une extrémité opposée à celle recevant la bille d'un pieu 62 destiné à venir appuyer contre une bille formant le clapet 30 de la vanne 29. La bille 30 est maintenue contre le siège de la vanne 29 par un ressort 63 prenant appui sur une structure du caisson 56.

La figure 2 montre un début de sollicitation de l'assistance. Par exemple, la tige 6 est déjà légèrement introduite dans le cylindre intercalaire 15 et les ouvertures 53 sont sur le point de dépasser le joint torique 51. Lorsqu'elles l'auront dépassé, la chambre amont 18 sera fermée. Lorsqu'elle est fermée, la continuation de l'appui sur la tige de commande 6 provoque le décollage du socle 55 reposant contre le fond de la chambre arrière 25 du fait de l'augmentation de pression dans les chambres 18 et 25. Le socle 55 vient alors pousser sur la bille 60. Dans un premier temps, la bille 60 repousse le ressort 61 sans autre effet. Après une course, la plus courte possible pour éviter une trop grande course morte de la pédale 2, la bille 60 vient en appui franc sur un rebord 64 de l'équipage mobile 54.

Du fait de cet appui franc, d'une part l'équipage mobile 54 creux est obturé. D'autre part, l'avancée du socle 55 provoque le déplacement de l'équipage mobile 54 et notamment de son pieu 62 en direction de la bille 30. L'équipage mobile lui-même est normalement repoussé vers le socle 55 à l'aide d'un ressort 64 prenant appui sur un corps du caisson 56. Le caisson 56 est un piston creux muni d'une cloison séparatrice fixe 65. Cette cloison fixe 65 sert de siège à la vanne 29. Cette cloison fixe 65 sépare le caisson 56 creux en deux parties : une première partie formant la chambre avant 26 et une deuxième partie formant une chambre d'accès 66 en relation, par des communications telles que 67, avec la tubulure 42.

Lorsque le pieu 62 pousse sur la bille 30, celle-ci laisse entrer la pression produite par la pompe 34 (figure 1) jusque dans la chambre 26. La chambre 26 est formée d'une part par la partie creuse du caisson 56 et d'autre part par un espace annulaire avec lequel elle communique par des trous tels que 68 dans la paroi du caisson 56. Cet espace annulaire est lui-même en relation par la communication 28 avec la chambre aval 19.

L'avancée de la tige 6 a donc provoqué l'avancée du socle 25, l'avancée de l'équipage mobile 54, l'ouverture de la vanne 29 et la mise en pression de la chambre 19 avec la pression de liquide apporté par la tubulure 42. Dans ces conditions, le piston prolongateur 16 se trouve soumis, par une couronne périphérique 69, au supplément de pression appliqué par la pompe 34. Ce supplément de pression conduit le piston 16 à se déplacer vers le maître cylindre, sur la figure 2 vers la gauche.

Dans ces conditions, pour une position donnée de la tige 6 de commande (supposée maintenue fixe à une position de freinage), la chambre amont 18 voit son volume augmenter puisque le piston prolongateur 16 s'échappe vers le maître cylindre sous l'effet de l'assistance hydraulique. Dans ces conditions, la pression dans cette chambre amont 18 baisse, entraînant la baisse de pression dans la chambre arrière 25. Comme la pression dans la chambre 25 baisse, le socle 55 recule, de même que, in fine, la bille 60 et l'équipage mobile 54. Dans ces conditions, la vanne 29 se ferme par ré-appui de la bille 30 sur son siège 65. En agissant ainsi, on a réalisé un asservissement de position. Si on avance à nouveau un peu la tige 6, le même phénomène se reproduit, le caisson se comprime et le socle 55 se déplace vers l'avant jusqu'à ce que l'avancée du piston prolongateur 16 soit suffisante pour les faire retourner à l'équilibre.

Lors du défreinage, le pilotage de la vanne 38 conduit à faire baisser la pression dans la tubulure 42. Parallèlement, on se trouve alors dans la situation que la pression dans la chambre aval 26 est supérieure à celle présente dans la chambre d'accès 66. Pour évacuer cette surpression, l'équipage mobile 54, de forme tubulaire creuse et contenant en son centre le ressort 61 est muni d'un ensemble de trous périphériques tels que 70. Par exemple, quatre trous périphériques mènent de la chambre 26 à l'intérieur de l'alésage de l'équipage mobile 54. La haute pression disponible dans la chambre 26 peut alors fuir jusque dans la chambre 25 où elle contribue à autoriser le retour du socle 55 contre le fond de la chambre 25 puisque par ailleurs la bille 60 ne vient plus obturer la partie creuse de l'équipage mobile 54. La chambre intermédiaire entre le socle 55 et le caisson 56 est par ailleurs mise en communication par des moyens non représentés avec le réservoir 31 par une tubulure du même type que l'alésage 45. Au repos, la pression résidant entre le socle 55 et le caisson 56 s'équilibre donc avec la pression dans les chambres 25 et 26.

Sur le plan industriel, le cylindre intercalaire 15 est monté dans le prolongement exact du cylindre du maître cylindre. De cette façon, le piston prolongateur peut tout simplement être formé d'une extension vissée dans un appui 14 du piston du maître cylindre.

Pour le montage de l'équipage mobile 54 et du caisson 56 dans le cylindre accolé 22, on procède de la façon suivante. Premièrement, la bille 30 est placée sur le siège 65 et le ressort 63 est monté au-dessus de la bille 30 et y est maintenu par un couvercle. Puis, le ressort 64 est mis en place dans la chambre 26. L'ensemble, siège et couvercle, est ensuite monté dans le fond du caisson 56 auquel il est maintenu par un bouchon vissé 71. Ce bouchon 71 comporte les butées 58. Puis l'équipage mobile 54 est glissé à l'intérieur de la bague 24 formée dans le caisson 56. Puis le ressort 61 est monté dans l'alésage de l'équipage mobile 54 avant que la bille 60 ne vienne le coiffer. Lorsque la bille 60 est en place, un anneau de maintien 72 surmonté d'une rondelle 73 est vissé de l'autre côté du caisson 56 de manière à empêcher l'échappement de l'équipage mobile 54. Celui-ci conserve néanmoins sa mobilité, notamment sous l'effet du ressort 64. Puis le ressort 59 est mis en place autour de l'anneau 72 et de la rondelle 73. Puis le socle 55 est enfilé avec son extrémjté destinée à appuyer sur la bille 60 dans le ressort 59. L'ensemble est alors monté dans le cylindre accolé 22 qui est bouché par un fond 74 vissé. L'ensemble ainsi réalisé est alors prêt à l'emploi. Pour sa part, un élément du piston prolongateur 16 est vissé sur un autre élément formant le piston primaire 7 avant d'être engagé dans la bague 17, présente dans le cylindre intercalaire 15.

La relation entre la force d'entrée Fe en appui sur la tige 6 et la pression Pp dans la chambre primaire du maître cylindre est

$$Fe = Pp \times (S4 \times S3 \times S6 / (S2 \times (S6-S5) + S4 \times S5)).$$

La pression modulée Pm disponible dans la chambre 26 est alors égale à Pm = Pp x ((S2 xS6 / (S2 x (S6-S5) + S4 x S5)) en négligeant les forces des différents ressorts. Dans un exemple les diamètres des différentes sections circulaires S2 à S6 sont respectivement 27,6mm, 20,6mm, 10mm, 15mm, 23,8mm. Ces dimensions conduisent, avec une force appliquée de 53 daN, et avec une pression maximale délivrée par la pompe égale à 123000 HPa, à obtenir une pression supplémentaire dans la chambre d'assistance égale à 80000 HPa, soit une force d'assistance considérable d'environ 560 daN.

Le choix d'un moteur à courant continu 36 pour entraîner la pompe 34, dans lequel le couple disponible est proportionnel au courant, est une solution préférée car la fonction de transfert est simple. En outre un moteur à courant continu, dit aussi moteur couple, présente l'avantage de très bien supporter le blocage. Par exemple, la pompe peut alors être du type aspirante foulante (sans fuite inverse). Elle peut néanmoins aussi être du type péristaltique, à membranes ou à ailettes, ou d'une manière générale de type volumétrique. Ces trois derniers types ne provoquent pas à l'arrêt du moteur lorsque la pression dans la chambre 6 atteint la valeur désirée. Avec le dispositif de l'invention, il devient même possible d'arrêter la pompe. En effet, une fois que le freinage est terminé, il n'est plus nécessaire de continuer à faire tourner le moteur 36, d'où une économie d'énergie.

## Revendications

1. Dispositif d'assistance hydraulique de freinage comporte un maître cylindre muni d'une chambre primaire (9) et d'un piston (7) primaire mû par ailleurs par une tige (6) de commande et une source hydraulique d'assistance, **caractérisé en ce qu'**il comporte un régulateur hydraulique (12) interposé entre un point d'appui (13) de la tige de commande et un point d'appui (14) sur le piston primaire qui comporte :

      - un cylindre intercalaire (15) interposé entre un point d'appui de la tige de commande et le cylindre primaire
      - un piston prolongateur (16) en appui sur le piston primaire et interposé, dans le cylindre intercalaire, entre un point d'appui de la tige de commande et le piston primaire,
      - ce piston prolongateur définissant dans le cylindre intercalaire une chambre amont (18) proche de la tige de commande et une chambre aval (19) proche du piston primaire,
      - le piston prolongateur ayant une surface (21) de section plus grande dans la chambre aval que dans (20) la chambre amont,
      - un cylindre (22) accolé au cylindre intercalaire,
      - une navette (23), déformable qui comporte un socle et un caisson écartés l'un de l'autre par un ressort et placée dans le cylindre accolé formant une chambre arrière (25) et une chambre avant (26),
      - les chambres amont et aval du cylindre intercalaire étant en communication (27, 28) respectivement avec la chambre arrière et la chambre avant du cylindre accolé,
      - une vanne (29, 30) déclenchée par cette navette,
      - une communication (41) pour mettre en communication une source hydraulique (31) avec la chambre avant, par l'intermédiaire de la vanne.

2. Dispositif selon la revendication 1, **caractérisé en ce que** le cylindre intercalaire fait corps commun et/ou continu avec le cylindre primaire.

3. Dispositif selon l'une des revendications 1 et 2, **caractérisé en ce qu'**il comporte un cylindre secondaire et un piston secondaire pour former un maître cylindre tandem.

**4.** Dispositif selon la revendication 1 **caractérisé en ce que** la navette comporte un équipage mobile, mobile dans le caisson, et susceptible de manoeuvrer la vanne.

**5.** Dispositif selon la revendication 1 **caractérisé en ce que** l'équipage mobile est creux et comporte une ouverture (70) pour communiquer avec le réservoir.

**Claims**

**1.** Hydraulic brake booster device comprising a master cylinder provided with a primary chamber (9) and with a primary piston (7) incidentally moved by a control rod (6) and a hydraulic boost source, **characterized in that** it comprises a hydraulic regulator (12) interposed between a bearing point (13) of the control rod and a bearing point (14) on the primary piston which comprises:

- an interposed cylinder (15), interposed between a bearing point for the control rod and the primary cylinder,
- an extension piston (16) bearing against the primary piston and interposed, in the interposed cylinder, between a bearing point of the control rod and the primary piston,
- this extension piston defining in the interposed cylinder an upstream chamber (18) close to the control rod and a downstream chamber (19) close to the primary piston,
- the extension piston having a surface (21) of larger cross section in the downstream chamber than the one (20) in the upstream chamber,
- a cylinder (22) contiguous with the interposed cylinder,
- a deformable shuttle (23) which comprises a mount and a shell which are separated from one another by a spring and which shuttle is positioned in the contiguous cylinder forming a rear chamber (25) and a front chamber (26),
- the upstream and downstream chambers of the interposed cylinder being in communication (27, 28) with the rear chamber and the front chamber of the contiguous cylinder respectively,
- a valve (29, 30) operated by this shuttle,
- a communication (41) for placing a hydraulic source (31) in communication with the front chamber via the valve.

**2.** Device according to Claim 1, **characterized in that** the interposed cylinder is common and/or continuous with the primary cylinder.

**3.** Device according to either of Claims 1 and 2, **characterized in that** it comprises a secondary cylinder and a secondary piston to form a tandem master cylinder.

**4.** Device according to Claim 1, **characterized in that** the shuttle comprises a set of moving gear, able to move in the shell, and capable of working the valve.

**5.** Device according to Claim 1, **characterized in that** the set of moving gear is hollow and comprises an opening (70) to communicate with the reservoir.

**Patentansprüche**

**1.** Vorrichtung zur hydraulischen Bremsunterstützung, mit einem Hauptzylinder, der mit einer Primärkammer (9) und einem Primärkolben (7) versehen ist, welcher außerdem durch eine Steuerstange (6) und eine hydraulische Unterstützungsquelle bewegt wird, **dadurch gekennzeichnet, dass** sie einen hydraulischen Regler (12) aufweist, der zwischen einer Auflagestelle (13) der Steuerstange und einer Auflagestelle (14) am Primärkolben angeordnet ist und Folgendes aufweist:

- einen Zwischenzylinder (15), der zwischen einer Auflagestelle der Steuerstange und dem Primärzylinder angeordnet ist,
- einen Verlängerungskolben (16), der am Primärkolben anliegt und im Zwischenzylinder zwischen einer Auflagestelle der Steuerstange und dem Primärkolben angeordnet ist,
- wobei dieser Verlängerungskolben im Zwischenzylinder eine vorgeschaltete Kammer (18) nahe der Steuerstange und eine nachgeschaltete Kammer (19) nahe dem Primärkolben definiert,
- wobei der Verlängerungskolben eine Fläche (21) aufweist, deren Querschnitt in der nachgeschalteten Kammer größer ist als derjenige (20) in der vorgeschalteten Kammer,
- einen am Zwischenzylinder angefügten Zylinder (22),
- eine verformbare Pendeleinrichtung (23), die einen Sockel und ein Gehäuse aufweist, die durch eine Feder voneinander beabstandet sind, und die im angefügten Zylinder angeordnet ist und dabei eine hintere Kammer (25) und eine vordere Kammer (26) bildet,
- wobei die vorgeschaltete und die nachgeschaltete Kammer des Zwischenzylinders mit der hinteren Kammer bzw. mit der vorderen Kammer des angefügten Zylinders verbunden sind (27, 28),
- ein durch diese Pendeleinrichtung ausgelöstes Ventil (29, 30),
- eine Verbindung (41) zum Verbinden einer Hydraulikquelle (31) mit der vorderen Kammer über das Ventil.

2. Vorrichtung nach Anspruch 1, **dadurch gekennzeichnet, dass** der Zwischenzylinder mit dem Primärzylinder einen einzigen und/oder einen durchgehenden Körper bildet.

3. Vorrichtung nach einem der Ansprüche 1 und 2, **dadurch gekennzeichnet, dass** sie einen Sekundärzylinder und einen Sekundärkolben aufweist, um einen Tandem-Hauptzylinder zu bilden.

4. Vorrichtung nach Anspruch 1, **dadurch gekennzeichnet, dass** die Pendeleinrichtung eine bewegliche Gruppe aufweist, die im Gehäuse beweglich ist und das Ventil betätigen kann.

5. Vorrichtung nach Anspruch 1, **dadurch gekennzeichnet, dass** die bewegliche Gruppe hohl ist und eine Öffnung (70) zur Verbindung mit dem Behälter aufweist.

Fig. 1

# Fig. 2

EP 2 300 291 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 3502473
- DE 3209337
- DE 3502474
- DE 4338906